# EUROPEAN PATENT APPLICATION

(11) **EP 4 729 317 A1**
(43) Date of publication of application: **22.04.2026**
(21) Application number: 24207277.5
(22) Date of filing: 17.10.2024
(51) Int. Cl.: B60G 17/0165

(54) **SAFETY SYSTEM FOR A VEHICLE**

(71) Applicant: Volvo Truck Corporation, 405 08 Göteborg (SE)
(72) Inventor: BON, Philippe, 69720 SAINT-BONNET-DE-MURE (FR); QUIBRIAC, Yann, 69007 LYON (FR)
(74) Representative: Germain Maureau

(57) **Abstract**

A safety system (10) configured for use on a vehicle (100) including a sensor unit (40) configured to detect an object (300) at a location surrounding the vehicle and to transmit a detection signal corresponding to detection of the object at a location surrounding the vehicle; and a control unit (20) configured to operate the ride height adjustment system of the vehicle, the control unit being configured to process a ride height adjustment demand to transition at least a portion of the vehicle between at least a first position and a second position and to receive the detection signal transmitted by the sensor unit; wherein the control unit is configured to suppress the ride height adjustment demand in response to the detection signal received from the sensor unit.

## Description

### TECHNICAL FIELD

The disclosure relates generally to a safety system configured for use on a vehicle. In particular aspects, the disclosure relates to a safety system configured for use on a vehicle to preclude adjustment of a position of at least a portion of the vehicle to prevent a potentially hazardous condition.

The disclosure may relate to heavy-duty vehicles, such as trucks, buses, and/or construction equipment, among other vehicle types. However, although the disclosure may be described with respect to a particular vehicle, the disclosure is not restricted to any particular vehicle.

### BACKGROUND

A vehicle such as a semi-trailer truck, which may include a tractor unit having a fifth-wheel coupling and a trailer unit, is often configured for ride height adjustment. In a vehicle configured for ride height adjustment, a user may adjust a ride height of at least a portion of the vehicle from a driving surface below the vehicle.

The user may adjust a ride height of the vehicle for proper engagement between the fifth-wheel coupling and trailer units of varying heights, to increase ground clearance over uneven driving surfaces, to decrease ground clearance for improved aerodynamics and performance of the vehicle, and/or the like. The vehicle may adjust a ride height of the vehicle through a suspension system of the vehicle.

Adjustment of a ride height of the vehicle may present a potentially hazardous condition for an object and/or a person at a location surrounding the vehicle, which the user has not accounted for when undertaking a ride height adjustment of the vehicle. For example, a ride height adjustment may cause a harmful contact and/or collision between the vehicle and an object and/or person at a location surrounding the vehicle.

It is desirable to provide a safety system configured for use on a vehicle that is configured to suppress and/or prevent a ride height adjustment of a vehicle in response to a real-time detection of an object and/or person at a location surrounding a vehicle.

### SUMMARY

According to aspects of the disclosure, a safety system configured for use on a vehicle is provided. The vehicle includes a ride height adjustment system configured to transition at least a portion of the vehicle between a first position and a second position in response to a ride height adjustment demand. The safety system includes a sensor unit configured to detect an object at a location surrounding the vehicle and to transmit a detection signal corresponding to detection of the object at a location surrounding the vehicle. The safety system includes a control unit configured to operate the ride height adjustment system of the vehicle. The control unit is configured to process a ride height adjustment demand to transition at least a portion of the vehicle between at least a first position and a second position and to receive the detection signal transmitted by the sensor unit. The control unit is configured to suppress the ride height adjustment demand in response to the detection signal received from the sensor unit.

According to aspects of the disclosure, the sensor unit may include a sensor configured to be arranged on the vehicle.

According to aspects of the disclosure, the sensor of the sensor unit may be configured to detect the object at a location surrounding the vehicle corresponding to one or more of a front of the vehicle, a rear of the vehicle, a first side of the vehicle, and a second side of the vehicle.

According to aspects of the disclosure, the sensor of the sensor unit may be one or more of an image sensor, a motion sensor, a LiDAR sensor, and an ultrasonic sensor.

According to aspects of the disclosure, the sensor unit may include a plurality of the sensor.

According to aspects of the disclosure, the control unit may be configured to determine an object distance of the object from at least a portion of the vehicle from the detection signal.

According to aspects of the disclosure, the control unit may be configured to suppress the ride height adjustment demand in response to the detection signal received from the sensor unit when the object distance is less than or equal to a predetermined object distance.

According to aspects of the disclosure, the control unit may be configured to process a vehicle service demand to indicate servicing of the vehicle.

According to aspects of the disclosure, the control unit may be configured to suppress the ride height adjustment demand in response to the vehicle service demand.

According to aspects of the disclosure, the control unit may be configured to release suppression of the ride height adjustment demand in response to an override request submitted by a user.

According to aspects of the disclosure, the first position and the second position of the vehicle may correspond to a ride height of at least a portion of the vehicle.

According to aspects of the disclosure, the sensor unit may be configured to detect the object at a location surrounding the vehicle continuously.

According to aspects of the disclosure, a vehicle including the safety system according to any aspect of the disclosure herein is presented. The vehicle includes a ride height adjustment system configured to transition at least a portion of the vehicle between a first position and a second position in response to a ride height adjustment demand.

According to aspects of the disclosure, the ride height adjustment system may be in the form of a suspension system of the vehicle.

According to aspects of the disclosure, a method of safely adjusting a ride height of at least a portion of a vehicle is presented. The method includes providing the safety system according to any aspect of the disclosure presented herein. The method includes transmitting a ride height adjustment demand to the control unit to transition at least a portion of the vehicle between at least a first position and a second position with the ride height adjustment system. The method includes detecting an object at a location surrounding the vehicle with the sensor unit. The method includes transmitting a detection signal corresponding to detection of the object in a location surrounding the vehicle to the control unit. The method includes suppressing the ride height adjustment demand in response to the detection signal received from the sensor unit with the control unit.

In the manner described and according to aspects illustrated herein, the safety system, the vehicle, and the method safely adjusting a ride height of at least a portion of a vehicle are configured to suppress and/or prevent a ride height adjustment of a vehicle in response to a real-time detection of an object and/or person at a location surrounding the vehicle.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** shows a side perspective view of a vehicle according to aspects of the disclosure;
**FIG. 2** shows a side perspective view of a ride height adjustment system of the vehicle of **FIG. 1** according to aspects of the disclosure;
**FIG. 3** is a top schematic view of a safety system configured for use on the vehicle of **FIG. 1** according to aspects of the disclosure;
**FIG. 4A** is a side view of the safety system of **FIG. 3****,** depicting the vehicle of **FIG. 1** in a first position according to aspects of the disclosure;
**FIG. 4B** is a side view of the safety system of **FIG. 3****,** depicting the vehicle of **FIG. 1** in a second position according to aspects of the disclosure; and
**FIG. 5** is a schematic diagram of the safety system of **FIG. 3** according to aspects of the disclosure.

### DETAILED DESCRIPTION

The detailed description set forth below provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to a particular example described. On the contrary, the intention of this disclosure is to cover all modifications, equivalents, and alternatives falling within the scope of the disclosure.

Various materials, methods of construction, methods of fastening, and the like may be described in the context of disclosed examples. Those skilled in the art will recognize known substitutes for the materials, construction methods, fastening methods, and the like, all of which are contemplated as compatible with the disclosed example and are intended to be encompassed by the appended claims.

As used in this disclosure and the appended claims, the singular forms "a," "an," and "the" include plural referents, unless the content clearly dictates otherwise. As used in this disclosure and the appended claims, the term "or" is generally employed in a sense including "and/or," unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims, should be understood as including its end value(s), unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like manner (e.g., "between" versus "directly between," "adjacent" versus "directly adjacent," etc.).

Spatially relative terms, such as "top," "bottom," "middle," "inner," "outer," "beneath," "below," "lower," "above," "upper," and the like may be used herein for ease of description to describe one element or relationship of a feature to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, section, or parameter from another element, component, region, layer, section, or parameter. Thus, a first element, component, region, layer, section, or parameter discussed herein could be termed a second element, component, region, layer, section, or parameter without departing from the teachings of the present disclosure.

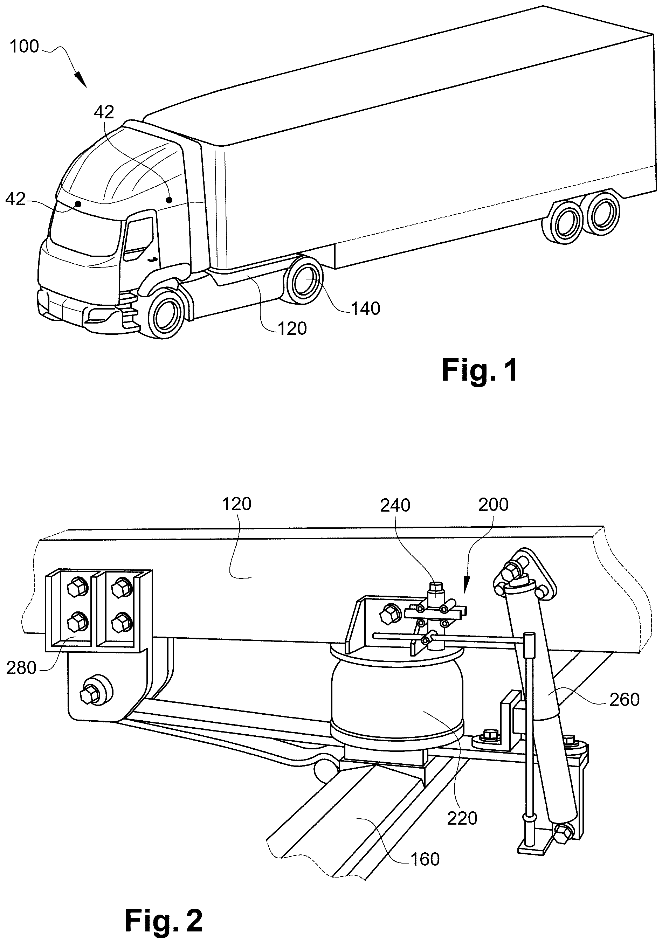

**FIGS. 1-5** show a safety system 10 configured for use on a vehicle 100. Referring to FIG. 1, it is contemplated that the vehicle 100 to which the safety system 10 is configured for use on may be a heavy-duty vehicle, such as a truck, bus, and/or construction equipment, though it should be understood that the safety system 10 may be configured for use on other types of vehicles. In examples, the vehicle 100 may be a tractor unit of a semi-trailer truck.

As shown by **FIG. 2****,** the vehicle 100 may include a ride height adjustment system 200 configured to adjust a ride height of the vehicle 100. Additionally or alternatively, the ride height adjustment system 200 may be referred to as and/or considered to be included by the safety system 10. It is contemplated that the term "ride height" may be understood as a distance (may also be referred to herein as a "clearance") between one or more portion of the vehicle 100, such as a frame 120 of the vehicle 100 and/or the like, and a driving surface upon which the vehicle 100 may be driven. In examples, the ride height adjustment system 200 may be in the form of a suspension system of the vehicle 100 configured to absorb shock and connect the frame 120 of the vehicle 100 with wheels 140 of the vehicle 100. In particular, the ride height adjustment system 200 may be in the form of an air suspension system configured for ride height adjustment of the vehicle 100. Accordingly, it is contemplated that the ride height adjustment system 200 may include one or more of an air spring member 220 configured to be inflated and deflated with a fluid (e.g. air and/or the like) to adjust the ride height of the vehicle 100, a ride height control valve 240 configured to regulate a flow of the fluid to the air spring member 220, a damper 260 configured to absorb an impact exerted toward the frame 120 of the vehicle 100, and a linking member 280 configured to connect the ride height adjustment system 200 to the frame 120 of the vehicle 100 to an axle 160 of the vehicle 100.

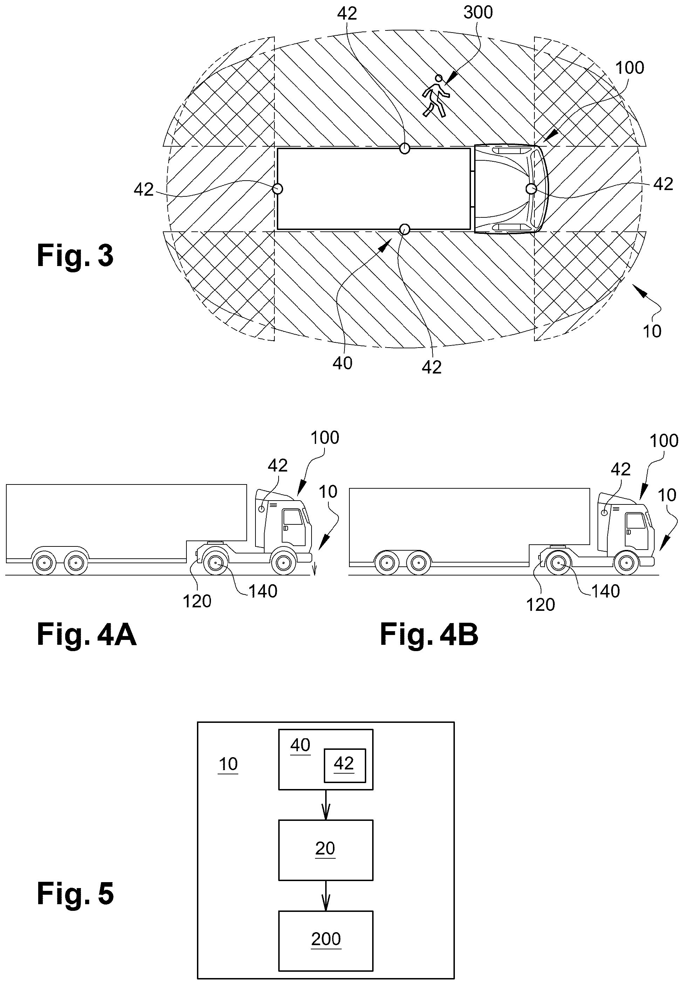

Referring to **FIGS. 2** **and** **4A****-4B,** the ride height adjustment system 200 is configured to transition the vehicle 100 between at least a first position (see **FIG. 4A****)** and a second position (see **FIG. 4B****)** in response to a ride height adjustment demand submitted by a user. It is contemplated that the ride height adjustment demand may be in the form of a signal, which may be transmitted from a user interface (not shown) included by the vehicle 100 and/or a mobile device (e.g. a remote control, a smartphone, and/or the like) (not shown). The first position of the vehicle 100 may correspond to a first distance between the one or more portion of the vehicle 100 and the driving surface and the second position of the vehicle 100 may correspond to a second distance between the one or more portion of the vehicle 100 and the driving surface. In examples, the first distance of the first position of the vehicle 100 may be greater than the second distance of the second position of the vehicle 100. Accordingly, the first position of the vehicle 100 may be referred to as and/or considered to be a "raised position" of the vehicle 100 and the second position of the vehicle 100 may be referred to as and/or considered to be a "lowered position" of the vehicle 100. The ride height adjustment system 200 may be configured to transition the vehicle 100 to a third position in response to a ride height adjustment demand submitted by the user. The third position may correspond to a third distance between the one or more portion of the vehicle 100 and the driving surface. The third distance of the third position of the vehicle 100 may be variable and/or may correspond to any distance between the first distance of the first position of the vehicle 100 and the second distance of the second position of the vehicle 100.

As shown by **FIG. 5****,** the safety system 10 includes an electronic control unit 20 (hereafter, the "control unit" or the "ECU") configured to operate the safety system 10. Additionally or alternatively, it is contemplated that the control unit 20 may referred to as and/or considered to be included by the vehicle 100. In examples, the control unit 20 may be configured to operate the ride height adjustment system 200. The control unit 20 may be configured to receive and/or process the ride height adjustment demand. Additionally or alternatively, the control unit 20 may be configured to process the ride height adjustment demand and to transmit the ride height adjustment demand to the ride height adjustment system 200 to prompt the ride height adjustment system 200 to transition the vehicle 100 between the first position and the second position. Additionally or alternatively, it is contemplated that the control unit 20 may be referred to as and/or considered to be the user.

As shown by **FIGS. 3 and 5****,** the safety system 10 includes a sensor unit 40 configured to detect an object and/or person 300 at a location surrounding the vehicle 100 (hereafter, referred to herein as "the object"). In examples, the sensor unit 40 may be configured to detect the object continuously, such that the object may be detected in real-time. The location surrounding the vehicle 100 may correspond to one or more of a front of the vehicle 100, a rear of the vehicle 100, a first side of the vehicle 100, and a second side of the vehicle 100. In examples, the terms "front," "rear," and "side" as used herein may be understood in relation to a driving direction of the vehicle 100. The sensor unit 40 may include one or more sensor 42 configured to detect the object and to be arranged on the vehicle 100. In examples, the sensor 42 may be in the form of one or more of an image sensor, a motion sensor, a LiDAR sensor, an ultrasonic sensor, and/or the like. The sensor unit 40 may include a plurality of the sensor 42 configured to detect the object. In particular, the plurality of the sensor 42 may include one or more first sensor 42 configured to be arranged on the front of the vehicle 100, a second sensor 42 configured to be arranged on the rear of the vehicle 100, a third sensor 42 configured to be arranged on the first side of the vehicle 100, and a fourth sensor 42 configured to be arranged on the second side of the vehicle 100. However, the plurality of the sensor will be referred to herein as "the sensor 42," unless reference to the plurality of the sensor 42 is otherwise necessary. As such, with collective reference to "the sensor 42," it should be understood that the structures and/or relationships disclosed may apply to the first sensor 42, the second sensor 42, the third sensor 42, and the fourth sensor 42.

Referring to **FIG. 5****,** the sensor unit 40 is configured to transmit a detection signal corresponding to detection of the object to the control unit 20 when the sensor 42 detects the object 300. Additionally or alternatively, the control unit 20 is configured to receive the detection signal from the sensor unit 40. In examples, the control unit 20 may be configured to operate the ride height adjustment system 200 to transition of the vehicle 100 between the first position and the second position when the detection signal is not received from the sensor unit 40. The control unit 20 may be configured to operate the ride height adjustment system 200 to restrict and/or block transition of the vehicle 100 between the first position and the second position when the detection signal is received from the sensor unit 40. Additionally or alternatively, the control unit 20 may be configured to process the ride height adjustment demand received from the user and to transmit the ride height adjustment demand to the ride height adjustment system 200 when the detection signal is not received from the sensor unit 40. The control unit 20 may be configured to process the ride height adjustment demand received from the user and to suppress transmission of the ride height adjustment demand to the ride height adjustment system 200 when the detection signal is received from the sensor unit 40. It is contemplated that suppression of transmission of the ride height adjustment demand to the ride height adjustment system 200 by the control unit 20 delays, restricts, and/or blocks transition of the vehicle 100 between the first position and the second position by the ride height adjustment system 200. In this manner, the safety system 10 is configured to prevent ride height adjustment of the vehicle 100 in response to a real-time detection of the object 300 at a location surrounding the vehicle 100 to protect the object 300 and/or the vehicle 100 from damage and/or injury caused by transition of the vehicle 100 between the first position and the second position.

Additionally or alternatively, the control unit 20 may be configured to determine an object distance of the object 300 from at least a portion of the vehicle 100 from the detection signal received from the sensor unit 40. The control unit 20 may be configured to process the ride height adjustment demand received from the user and to transmit the ride height adjustment demand to the ride height adjustment system 200 when the detection signal is received from the sensor unit 40 and the object distance is greater than or equal to a predetermined object distance. The control unit 20 may be configured to process the ride height adjustment demand received from the user and to suppress transmission of the ride height adjustment demand to the ride height adjustment system 200 when the detection signal is received from the sensor unit 40 and the object distance is less than or equal to the predetermined object distance. In this manner, the safety system 10 is configured to prevent ride height adjustment of the vehicle 100 in response to a real-time detection of the object 300 at a predetermined location surrounding the vehicle 100 to protect the object 300 and/or the vehicle 100 from immediate damage and/or injury caused by transition of the vehicle 100 between the first position and the second position.

Additionally or alternatively, the control unit 20 may be configured to receive and/or process a vehicle service demand submitted by the user to indicate servicing of the vehicle 100 by the user. In examples, the control unit 20 may be configured to operate the ride height adjustment system 200 to transition of the vehicle 100 between the first position and the second position when the vehicle 100 service demand is not received from the user. The control unit 20 may be configured to operate the ride height adjustment system 200 to restrict and/or block transition of the vehicle 100 between the first position and the second position when the vehicle service demand is received from the user. Additionally or alternatively, the control unit 20 may be configured to process the ride height adjustment demand received from the user and to transmit the ride height adjustment demand to the ride height adjustment system 200 when the vehicle service demand is not received from the user. The control unit 20 may be configured to process the ride height adjustment demand received from the user and to suppress transmission of the ride height adjustment demand to the ride height adjustment system 200 when the vehicle service demand is received from the user. In this manner, the safety system 10 is configured to prevent ride height adjustment of the vehicle 100 in response to a real-time indication of servicing of the vehicle 100 to protect the object 300 and/or the vehicle 100 from damage and/or injury caused by transition of the vehicle 100 between the first position and the second position.

In examples, the control unit 20 may be configured to release suppression of the ride height adjustment demand in response to an override request submitted by the user. It is contemplated that release of suppression of the ride height adjustment demand transmits the ride height adjustment demand to the ride height adjustment demand to the ride height adjustment system 200 to transition the vehicle 100 between the first position and the second position. In this manner, the safety system 10 is configured for flexibility when the user determines that no damage and/or injury to the object 300 and/or the vehicle 100 will be caused by transition of the vehicle 100 between the first position and the second position when one or more of the detection signal and the vehicle service demand is received by the control unit 20 from one or more of the sensor unit 40 and the user.

According to examples of the safety system 10, the safety system 10 may be provided as follows:
Example 1: A safety system 10 configured for use on a vehicle 100, the vehicle 100 including a ride height adjustment system 200 configured to transition at least a portion of the vehicle 100 between a first position and a second position in response to a ride height adjustment demand, the safety system 10 including: a sensor unit 40 configured to detect an object 300 at a location surrounding the vehicle 100 and to transmit a detection signal corresponding to detection of the object 300 at a location surrounding the vehicle 100; and a control unit 20 configured to operate the ride height adjustment system 200 of the vehicle 100, the control unit 20 being configured to process a ride height adjustment demand to transition at least a portion of the vehicle 100 between at least a first position and a second position and to receive the detection signal transmitted by the sensor unit 40; wherein the control unit 20 is configured to suppress the ride height adjustment demand in response to the detection signal received from the sensor unit 40.
Example 2: The safety system 10 according to Example 1, wherein the sensor unit 40 includes a sensor 42 configured to be arranged on the vehicle 100.
Example 3: The safety system 10 according to Example 2, wherein the sensor 42 of the sensor unit 40 is configured to detect the object 300 at a location surrounding the vehicle 100 corresponding to one or more of a front of the vehicle 100, a rear of the vehicle 100, a first side of the vehicle 100, and a second side of the vehicle 100.
Example 4: The safety system 10 according to any of Examples 1-3, wherein the sensor 42 of the sensor unit 40 is one or more of an image sensor, a motion sensor, a LiDAR sensor, and an ultrasonic sensor.
Example 5: The safety system 10 according to any of Examples 1-4, wherein the sensor unit 40 includes a plurality of the sensor 42.
Example 6: The safety system 10 according to any of Examples 1-5, wherein the control unit 20 is configured to determine an object distance of the object 300 from at least a portion of the vehicle 100 from the detection signal.
Example 7: The safety system 10 according to Example 6, wherein the control unit 20 is configured to suppress the ride height adjustment demand in response to the detection signal received from the sensor unit 40 when the object distance is less than or equal to a predetermined object distance.
Example 8: The safety system 10 according to any of Examples 1-7, wherein the control unit 20 is configured to process a vehicle service demand to indicate servicing of the vehicle 100.
Example 9: The safety system 10 according to Example 8, wherein the control unit 20 is configured to suppress the ride height adjustment demand in response to the vehicle service demand.
Example 10: The safety system 10 according to any of Examples 1-9, wherein the control unit 20 is configured to release suppression of the ride height adjustment demand in response to an override request submitted by a user.
Example 11: The safety system 10 according to any of Examples 1-10, wherein the first position and the second position of the vehicle 100 correspond to a ride height of at least a portion of the vehicle.
Example 12: The safety system 10 according to any of Examples 1-11, wherein the sensor unit 40 is configured to detect the object 300 at a location surrounding the vehicle 100 continuously.
Example 13: A vehicle 100 comprising the safety system 10 according to any of Examples 1-12 and a ride height adjustment system 200 configured to transition at least a portion of the vehicle 100 between a first position and a second position in response to a ride height adjustment demand.
Example 14: The vehicle 100 according to Example 13, wherein the ride height adjustment system 200 is in the form of a suspension system of the vehicle 100.
Example 15: A method of safely adjusting a ride height of at least a portion of a vehicle 100, the method comprising: providing the safety system 10 according to any of Examples 1-12; transmitting a ride height adjustment demand to the control unit 20 to transition at least a portion of the vehicle 100 between at least a first position and a second position with the ride height adjustment system 200; detecting an object 300 at a location surrounding the vehicle 100 with the sensor unit 40; transmitting a detection signal corresponding to detection of the object 300 in a location surrounding the vehicle 100 to the control unit 20; and suppressing the ride height adjustment demand in response to the detection signal received from the sensor unit 40 with the control unit 20.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. A safety system (10) configured for use on a vehicle (100), the vehicle including a ride height adjustment system (200) configured to transition at least a portion of the vehicle between a first position and a second position in response to a ride height adjustment demand, the safety system comprising:
a sensor unit (40) configured to detect an object (300) at a location surrounding the vehicle and to transmit a detection signal corresponding to detection of the object at a location surrounding the vehicle; and
a control unit (20) configured to operate the ride height adjustment system of the vehicle, the control unit being configured to process a ride height adjustment demand to transition at least a portion of the vehicle between at least a first position and a second position and to receive the detection signal transmitted by the sensor unit;
wherein the control unit is configured to suppress the ride height adjustment demand in response to the detection signal received from the sensor unit.

2. The safety system (10) according to claim 1, wherein the sensor unit (40) comprises a sensor (42) configured to be arranged on the vehicle (100).

3. The safety system (10) according to claim 2, wherein the sensor (42) of the sensor unit (40) is configured to detect the object (300) at a location surrounding the vehicle (100) corresponding to one or more of a front of the vehicle, a rear of the vehicle, a first side of the vehicle, and a second side of the vehicle.

4. The safety system (10) according to any of claims 1-3, wherein the sensor (42) of the sensor unit (40) is comprised of one or more of an image sensor, a motion sensor, a LiDAR sensor, and an ultrasonic sensor.

5. The safety system (10) according to any of claims 1-4, wherein the sensor unit (40) comprises a plurality of the sensor (42).

6. The safety system (10) according to any of claims 1-5, wherein the control unit (20) is configured to determine an object distance of the object (300) from at least a portion of the vehicle (100) from the detection signal.

7. The safety system (10) according to claim 6, wherein the control unit (20) is configured to suppress the ride height adjustment demand in response to the detection signal received from the sensor unit (40) when the object distance is less than or equal to a predetermined object distance.

8. The safety system (10) according to any of claims 1-7, wherein the control unit (20) is configured to process a vehicle service demand to indicate servicing of the vehicle (100).

9. The safety system (10) according to claim 8, wherein the control unit (20) is configured to suppress the ride height adjustment demand in response to the vehicle service demand.

10. The safety system (10) according to any of claims 1-9, wherein the control unit (20) is configured to release suppression of the ride height adjustment demand in response to an override request submitted by a user.

11. The safety system (10) according to any of claims 1-10, wherein the first position and the second position of the vehicle (100) correspond to a ride height of at least a portion of the vehicle.

12. The safety system (10) according to any of claims 1-11, wherein the sensor unit (40) is configured to detect the object (300) at a location surrounding the vehicle (100) continuously.

13. A vehicle (100) comprising the safety system (10) according to any of claims 1-12 and a ride height adjustment system (200) configured to transition at least a portion of the vehicle between a first position and a second position in response to a ride height adjustment demand.

14. The vehicle (100) according to claim 13, wherein the ride height adjustment system (200) is in the form of a suspension system of the vehicle.

15. A method of safely adjusting a ride height of at least a portion of a vehicle (100), the method comprising:
providing the safety system (10) according to any of claims 1-12;
transmitting a ride height adjustment demand to the control unit (20) to transition at least a portion of the vehicle between at least a first position and a second position with the ride height adjustment system (200);
detecting an object (300) at a location surrounding the vehicle with the sensor unit (40);
transmitting a detection signal corresponding to detection of the object in a location surrounding the vehicle to the control unit; and
suppressing the ride height adjustment demand in response to the detection signal received from the sensor unit (40) with the control unit.
